# EUROPEAN PATENT SPECIFICATION

(11) **EP 1 828 645 B1**
(45) Date of publication and mention of the grant of the patent: **20.08.2008**
(21) Application number: 06846888.3
(22) Date of filing: 15.11.2006
(51) Int. Cl.: F16H 63/06, F16H 27/06

(54) **GENEVA MOTION MACHINE CONTROLLER**
STEUERGERÄT FÜR EIN MALTESERKREUZGETRIEBE
DISPOSITIF DE COMMANDE DE MACHINE A MOUVEMENT A CROIX DE MALTE

(30) Priority: 15.11.2005 ZA 200510350; 15.03.2006 ZA 200602204
(43) Date of publication of application: 05.09.2007
(73) Proprietor: Varibox (Pty) Limited, 2194 Randburg (ZA)
(72) Inventor: NAUDE, Johannes, Jacobus, 2194 Randburg (ZA)
(74) Representative: Cooper, Simon Mark
(86) International application number: PCT/ZA2006/000128
(87) International publication number: WO 2007/059539

(56) References cited:
- WO-A-20/05036028
- CA-A- 887 392
- DE-A1- 3 016 324
- US-A- 1 571 653
- US-A- 3 234 819
- US-A- 3 638 510

## Description

### FIELD OF THE INVENTION

This invention relates to a Geneva motion controller according to independent claim 1 for operating any machine, and particularly but not exclusively a continuously variable transmission (CVT) on demand in incremental steps.

### BACKGROUND TO THE INVENTION

By the nature of their operation IVT machines such as that described in WIPO publication Number WO 2005/036028 A1 require a controller mechanism to shift the IVT from one ratio to the next. The ratio shifting requires the synchronised rotation in fixed increments in both directions of the lead screw nuts. Typically a 150kW IVT machine of the above type during ratio shifting, requires the lead screw nuts to be rotated through 60° increments between ratios, at a torque of about 500Nm per ratio shift. This shifting process needs to be completed in 65% of one revolution of the output shaft or for example, in 13ms if the output shaft is rotating at 3000rpm. As a result of the high 500Nm torque requirement in ratio shifting in 13ms intervals it will be necessary to employ a large and quick-acting servo or hydraulic system which is impractical in most applications and certainly so where the CVT is employed in light motor vehicles.

US 3,638,510 which represents the closest prior art, discloses a Geneva drive arrangement for shifting a carriage which carries printing characters and employs a swash plate arrangement for reversing the continuous indexing direction of the Geneva wheel by alternate engagement of two oppositely rotating Geneva wheel drivers. This machine makes no provision for halting the indexing process while the machine keeps running and is therefore unsuitable for indexing only on demand. Additionally the machine, as disclosed, is not suitable for high torque applications.

### SUMMARY OF THE INVENTION

A Geneva motion controller for operating the indexed movements of a machine according to the invention may comprise a rotatable input shaft, a rotatable output shaft, a Geneva wheel which is engaged with and rotatable by the output shaft, first and second Geneva wheel cam units which are rotatable in opposite directions by the input shaft on axes which are parallel to and located on diametrically opposite sides of the axis of rotation of the Geneva wheel, with each Geneva wheel cam unit being adapted, independently of each other, in dependence, on the required direction of rotation of the Geneva wheel, to engage and partially rotate the Geneva wheel through a predetermined degree of indexed rotation, and means for bringing one or the other of the cam units into driving engagement with the Geneva wheel, with each of the Geneva wheel cam units having three axially spaced formation arrangements with the central formation of both units together being adapted to lock the Geneva wheel against rotation while enabling the cam units to continue rotating with the upper formation arrangement of the first cam unit including a downwardly directed formation for releasably engaging and driving the Geneva wheel for indexed rotation in a first direction with the lower formation arrangement of the second cam unit including an upwardly directed formation for releasably engaging and driving the Geneva wheel only in the opposite direction of rotation when the cam unit formations are separately brought into engagement with the Geneva wheel by the driving means on a demand signal from the controller operator.

The Geneva wheel may be slidably engaged on the controller output shaft.

The Geneva wheel may be a six-armed wheel for index rotating the output shaft in 60° increments of rotation.

A portion of the controller output shaft on which the Geneva wheel is slidable may be linearly splined and the Geneva wheel includes an axially projecting hub which is internally splined to be axially slidable on the output shaft.

The three formation arrangements on each of the cam units are preferably horizontally aligned with each other and the driving means includes a collar which surrounds and is rotatably engaged with a projecting portion of the Geneva wheel hub for slidingly moving the Geneva wheel in and out of engagement with the three formation arrangements of the cam units.

The driving means may include a cylindrical trigger unit which is situated above the output shaft with its cylindrical side wall including an up shift cam formation and diametrically opposite an inverted identically profiled down shift cam formation, a trigger arrangement including a trigger pin which is movable onto a circumferential path on or adjacent the trigger unit during 180° of rotation of the trigger unit with either of the cam formations located at the centre of the 180° pin path during an index shift to cause the Geneva wheel hub collar to raise or lower the Geneva wheel into engagement with either the up or down shift cam unit Geneva wheel drive formations of the formation arrangements on the required demand signal from the controller operator.

The trigger arrangement may include means for biasing the trigger pin towards the trigger unit surface and an electrical solenoid for holding the pin clear of the remaining cam formation at the end of its 180° path around the trigger unit cylinder.

The trigger pin path is conveniently provided by a barrel cam groove including the up and down shift cam formations in the outer wall of the trigger unit cylinder and into which the pin is biased.

The barrel cam groove surfaces onto the outer surface of the trigger arrangement cylinder at diametrically opposite positions of the groove which are at 90° to a diametrical line which is centred on the up and down shift cam formations of the barrel groove with each up or down index shift demand of the controller commencing by engaging the pin with the trigger pin path at a surfaced position of the barrel cam groove which is ahead of the required up or down shift cam formation in the groove, in the direction of rotation of the trigger arrangement cylinder with the opposite following surfaced position of the barrel cam groove lifting the trigger pin to the surface of the trigger unit from where it is held from the surface by the activated trigger arrangement solenoid.

The trigger arrangement may include a substantially centrally pivoted arm which is connected at one end to means connected to the Geneva wheel collar and at the other end to a vertically movable trigger pin block which carries the trigger pin, its biasing means and its solenoid to cause the arm to be rocked about its pivot pin, by the trigger pin in following its path around the trigger arrangement cylinder, to move the collar between its three axial positions of engagement with the cam unit formation arrangements.

The free ends of the Geneva wheel arms may be concavely radiused and each of the cam unit axially spaced formation arrangements of each of the Geneva wheel cam units include an upper down shift cam formation, a central cylindrical Geneva wheel locking formation which is centred on the axis of rotation of the cam unit with the radius of formation corresponding to the radius of the free ends of the Geneva wheel arms and a lower up shift cam formation with the down and up shift cam formations being identical and inverted relatively to each other.

The Geneva wheel ratio down shift drive unit may include a lobe which projects radially outwardly from the down shift cam formation and carries a downwardly directed Geneva wheel drive pin and the ratio up shift cam unit includes a lobe which projects radially outwardly from the up shift cam formation and carries an upwardly directed Geneva wheel drive pin.

The machine to be controlled by the controller may be a CVT. The CVT is preferably that disclosed in the specification of WO 2005/036028 A1.

### BRIEF DESCRIPTION OF THE DRAWINGS

The invention is now described by way of a non-limiting example only with reference to the drawings in which:
Figure 1 is an isometric view from above and one side of the controller of the invention,
Figure 2 is a similar view to that of Figure 1 of the controller of the invention as seen from a different angle,
Figure 3 is a plan view of the controller,
Figure 4 is a side elevation of the controller shown sectioned on the line 4-4 in Figure 3,
Figure 5 is an exploded view of the output shaft of the controller of Figures 1 to 4,
Figure 6 is an enlarged sectioned side elevation through the upper end of the output shaft of the controller,
Figure 7 is an isometric view of a six limbed Geneva-type wheel,
Figure 8 is an isometric view from above and one side of a down ratio shifting cam unit of the controller,
Figure 9 is a view from below and one side of the Figure 8 cam unit,
Figure 10 is a developed side elevation of the circumferential side wall of the trigger unit of the controller showing the barrel cam of the unit,
Figure 11 is a plan view of the developed trigger unit side wall,
Figure 12 is a plan view of the ratio down shift cam unit of the controller,
Figure 13 is a plan view of the ratio up-shift cam unit of the controller,
Figure 14 is an isometric view of the indexing actuator assembly of the controller,
Figures 15 to 22 are each three orthographic views which sequentially illustrate the operation of the controller, and
Figure 23 is a side elevation of a grooved ratio changing tapered disc of an IVT machine which the controller of the invention is intended to operate.

### DETAILED DESCRIPTION OF THE PREFERRED EMBODIMENT

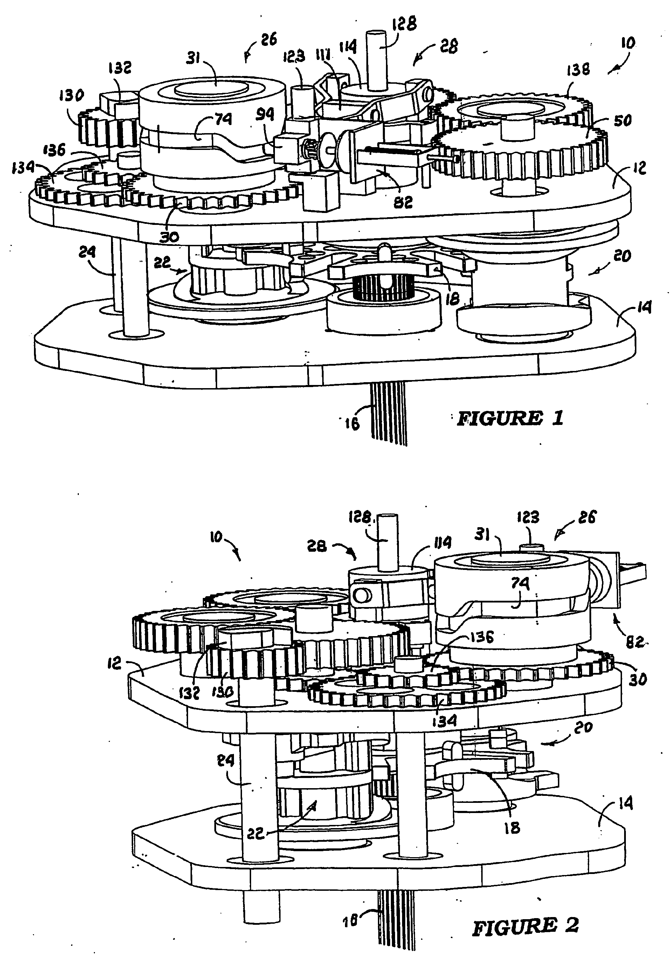

The Geneva motion machine controller 10 of the invention is shown in Figures 1 and 2 to include upper and lower frame plates 12 and 14, an indexing output shaft 16, a six limb Geneva-type wheel 18 which is carried by the shaft 16, a ratio up-shift cam unit 20, a ratio down-shift cam unit 22, the controller input shaft 24, a trigger unit 26 and an indexing actuator arrangement 28.

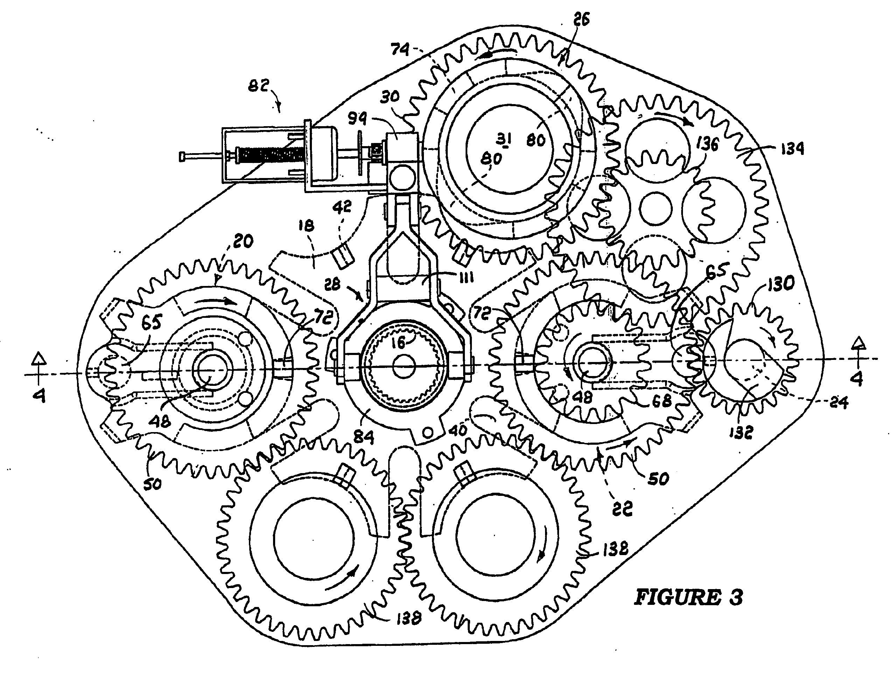

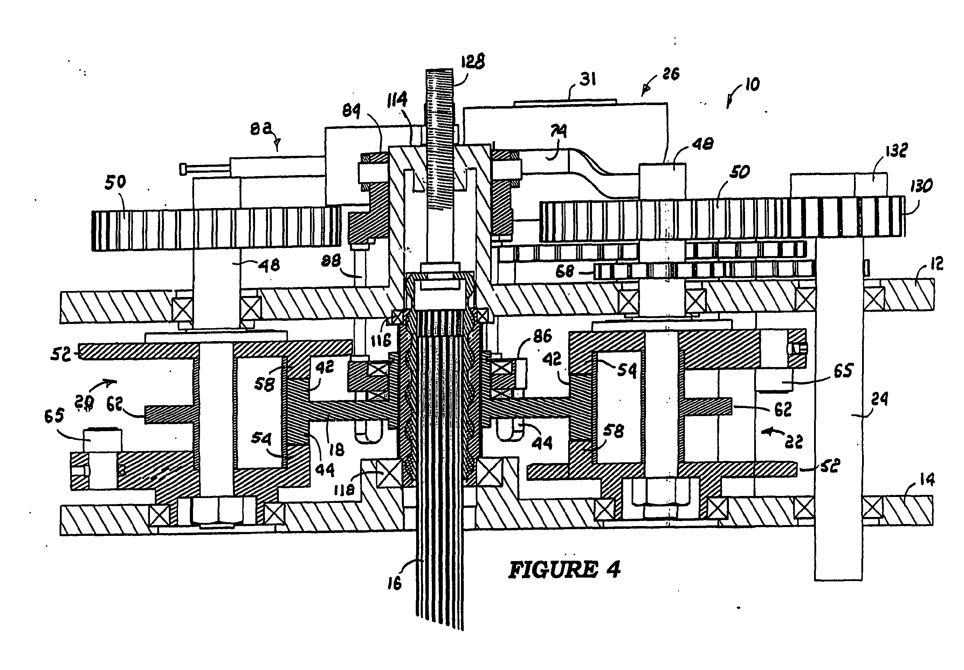

The indexing shaft 16 and the two cam units 20 and 22 are rotatable about axes which are aligned on the common horizontal transverse axis 4-4, as shown in Figure 3. Each of these components are, as shown in Figure 4, journaled for rotation in suitable bearings in the upper and lower frame plates 12 and 14.

The underside of the trigger unit 26 is fixed to a spacer which is in turn fixed to a trigger unit drive gear 30 with the entire trigger unit arrangement being journaled for rotation in bearings on a post 31, shown in Figures 3 and 4, which projects upwardly from the upper frame plate 12 of the controller frame.

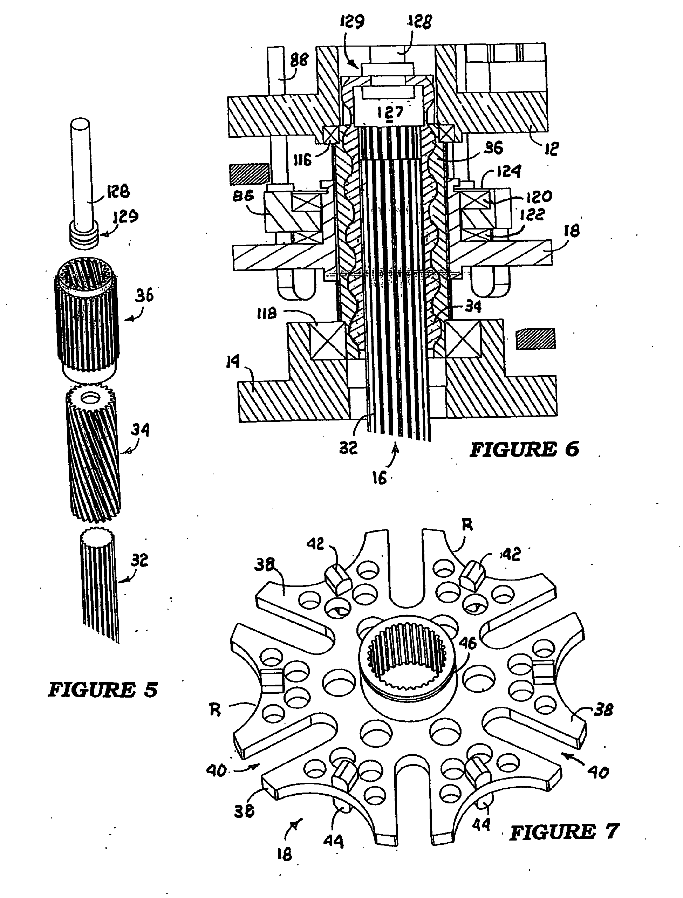

The indexing shaft 16, as shown in Figure 4, and more clearly in Figures 5 and 6, is a composite shaft including a linearly splined shaft portion 32 which, in use, is coupled to the ratio adjusting arrangement of an incremental CVT, a second shaft portion 34 which has a linearly splined bore in which the upper portion of the shaft portion 32 is telescopically slidable. The outer surface of the second shaft portion 34 is helically splined for engagement with a helically splined bore of a third shaft portion 36, the outer surface of which is linearly splined.

For ease of description, the composite shaft 16 is to be assumed to be a single shaft 16. The function of the various components of the shaft will be described below.

The Geneva wheel 18 is shown in Figure 7 to include six Maltese cross type limbs 38 which are separated from each other by radial slots 40, the radial centres of which are spread from each other at 60° intervals. The free end of each of the dovetail arms 38 carries an inwardly radiused outer edge R. Each arm additionally carries radially centred outwardly projecting upper and lower cam follower formations 42 and 44 respectively with the outer surfaces of the cam followers being in register with the radiused edges of the arms. The arms radiate outwardly from a central hub 46 which is internally linearly splined. The wheel hub 46 is slidably engaged with the splines on the outer surface of the portion 36 of the composite output shaft 16, as shown in Figures 4 and 6.

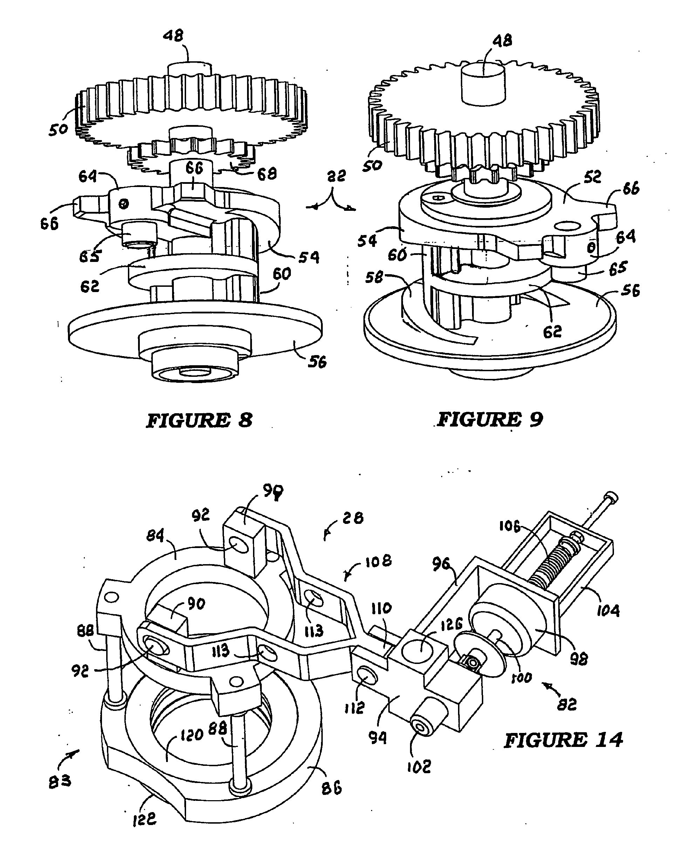

Figures 8 and 9 illustrate the ratio down-shift cam unit 22 as seen from below and above respectively. The cam unit is shown to include a drive shaft 48, a drive gear 50, a first cam plate 52 which includes a downwardly directed ratio down shift cam ramp 54, a second cam plate 56 which includes an upwardly directed ratio up shift cam ramp 58, all the cam ramp parameters of which, although inverted relatively to the cam ramp 54, are the same as those of the cam ramp 54. The two cam ramps are in exact vertical register with each other.

The cam plates 52 and 56 are co-axially spaced from each other, on the insides of the cam ramps 54 and 58, by a cylindrical spacer 60 which is substantially diametrically cut away above and below a half Geneva wheel locking disc 62. The half disc 62 and the remaining half of the cylinder 60 to the rear of it have an identical radius to the radius R of the Geneva wheel 18 arms 38. The upper cam plate 52 includes an outwardly projecting lobe 64 which carries a downwardly extending drive pin 65 for indexingly rotating the Geneva wheel 18 with a conventional Geneva motion in down shifting from one ratio of the CVT to another. The lobe 64 additionally includes two outwardly projecting Geneva wheel support formations 66, the purpose of which is described below.

The ratio down-shift cam unit 22 additionally includes a gear 68 which is fixed to its drive shaft 48 at a position between its upper cam plate 52 and the unit drive gear 50, as shown in Figure 8, for indirectly driving the trigger unit 26 as will be explained below.

The ratio up-shift cam unit 20 structure between the cam plates 52 and 56 are identical to that of the down-shift unit 22 described above but is, however, inverted relatively to the unit 22 with its Geneva wheel drive pin 65 facing upwardly, as shown in Figure 4. The cam unit 20 does not, as seen in Figure 4, include the gear 68.

As is mentioned above and will seen from Figure 3 the axes of rotation of the cam unit drive shafts 48 are situated in the controller frame on the horizontal axis 4-4 in common with the axis of the controller output shaft 16. It is to be noted that the Geneva drive pins 65 as well as the maximum lift position 72 of the cam unit cam ramps 54, 58, as shown in Figure 3, are in register with each other on the line 4-4 but are 180° out of phase to each other.

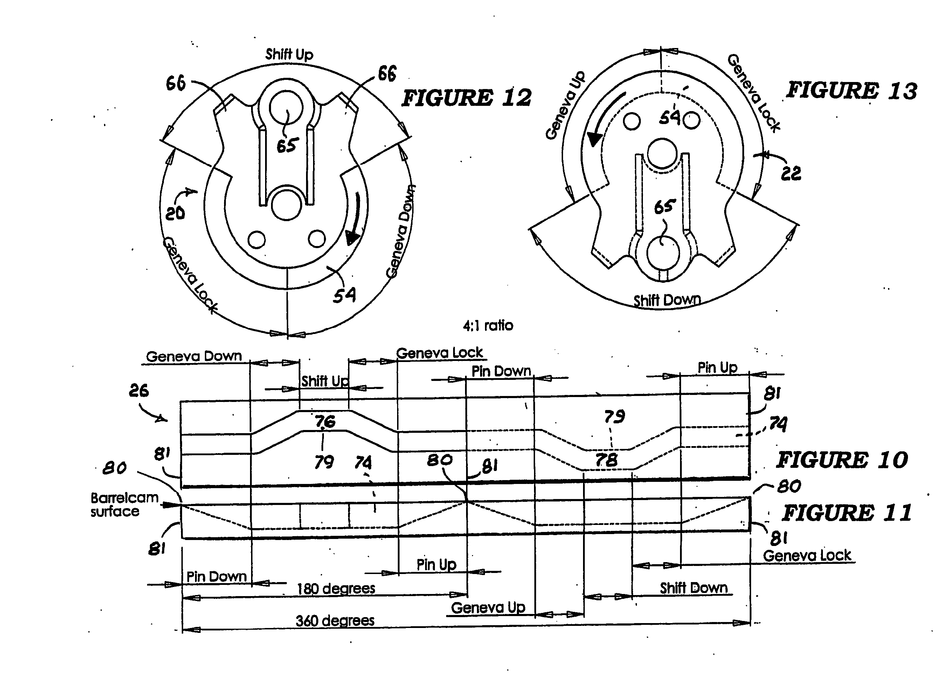

The cylindrical trigger unit 26 includes, as shown in Figures 1 and 2, a circumferentially continuous barrel cam groove 74 which is shown developed in Figures 10 and 11 to include two symmetrical and oppositely vertically displaced cam lobes 76 and 78 with their centres 79 on the trigger unit barrel cam being diametrically opposite each other. The groove 74 surfaces onto the outer surface of the trigger unit in diametrically opposite horizontal lobes 80 the centres 81 of which, as shown in Figure 11 and in dotted lines in Figures 3 and 15 to 22, are diametrically aligned with each other at 90° to a line intersecting the centres 79 of the groove 74 cam lobes 76 and 78.

Figures 12 and 13 are plan views of the ratio up-shift and ratio down-shift cam units 20 and 22 respectively which will be described in conjunction with Figures 10 and 11 below.

The indexing actuator assembly 28 is shown in Figure 14 to comprise an actuator trigger pin arrangement 82 and the Geneva wheel actuator assembly 83.

The Geneva wheel 18 actuator assembly includes upper and lower collars 84 and 86 respectively which are concentrically held in a vertically fixed spaced relationship by three equally circumferentially spaced spacer rods 88. The upper collar 84 carries two diametrically opposite upwardly projecting lugs 90 which in turn carry outwardly projecting pivot pins 92.

The trigger pin actuator arrangement 82 includes a trigger pin block 94 which carries a rearwardly extending L-shaped bracket 96 on which is mounted a high speed switching solenoid 98. The solenoid actuator rod 100 carries on its forward end a trigger pin 102 which is slidably located in a bore in the trigger pin block 94 and passes through the solenoid 98, the foot of the bracket 96 and through the base of a U-shaped bracket 104, as shown in the drawing. A compression spring 106 acts between the rear surface of the foot of the bracket 96 and the inner surface of the base of the bracket 104 to bias the solenoid actuator rod and so the trigger pin 102 to the extended position shown in Figure 14. On actuation of the solenoid 98 the pin 102 initially remains in the trigger unit groove 74 until the pin is lifted by a horizontal lobe 80 in the groove 74 from the groove at which position it is close enough to the solenoid to be retracted away from the surface of the trigger unit 26.

The actuator assembly 82 additionally includes a bifurcated arm 108 the single leg 110 of which is pivotally connected to the trigger pin block 94, as shown in Figure 14 by a pivot pin 112 which passes through an elongated hole in the arm leg 110. The splayed legs of the arms 108 include adjacent their free ends, elongated pivot pin holes which are engaged over the pivot pins 92 on the collar 84 lugs 90. The arm 108 is pivotally mounted on a block 111.which is fixed to and projects upwardly from the upper surface of the frame plate 12, as shown in Figures 1 and 3, by pivot pins which are engaged in the pin holes 113 in the legs of the arms 108. The upper collar 84 of the actuator assembly 82, as seen in Figures 1, 2 and 4, is slidably located on a cylindrical post formation 114 which is fixed to and projects upwardly from the upper surface of the upper frame plate 12 of the controller 10. The lower collar 86 of the assembly 82 is situated between the frame plates 12 and 14. The spacer rods 88 which extend between the collars pass freely through holes in the frame plate 12.

As mentioned above, the outer linear splines of the hub 46 of the Geneva wheel 18 are slidably engaged with the linear splines on the outer surface of the outer portion 36 of the shaft 16. The shaft portion 36, as shown in Figures 4 and 6, is located against axial movement between the frame plates 12 and 14 by thrust bearings 116 and 118 on which the shaft portion is rotatable about the axis of the shaft 16.

The upper end of the Geneva wheel hub 46 is rotatably supported in the lower collar 86 by thrust bearings 120 and 122, as seen in Figure 6. The upper thrust bearing 120 is locked in its recess in the collar 86 by a circlip 124.

The trigger pin block 94 has a vertical bore 126 which passes through it. A rod 123, shown in Figure 1, which is attached to and extends upwardly from the frame plate 12, adjacent the actuator arrangement post 114, passes through the pin block 94 bore 126 for the pin block to be slidable on the rod as the trigger pin 102 is moved vertically while engaged in and following the trigger unit 26 barrel groove 74, in use. This motion of the trigger pin block 94 causes the free ends of the bifurcated arm 108 to be rocked upwardly and downwardly in opposite vertical movements, relatively to that of the pin block 94, on the rod 123 about pivot pins in its pivot holes 113 so moving the collar 86 vertically to cause the Geneva wheel 18 to be moved between three positions in which two of its opposed arms 38 have their radiused R ends engaged with the edges of the continuously rotating locking discs 62 and the cylindrical spacers 60 behind them of the two cam units 20 and 22 to lock the Geneva wheel against rotation, and the ratio down and up shift cams 54 and 58 of the cam units 22 and 20. The three positions of movement of the Geneva wheel are thus; ratio up shift, Geneva wheel locked and ratio down shift positions and vice versa.

The gearing of the controller is now described with reference to Figures 1 to 4.

The input shaft 24, which is driven by the output shaft of the CVT which it is to control, carries the controller drive gear 130 which is partially rotatably mounted on the upper end of the shaft and is driven, in this embodiment of the invention, in one direction of rotation or the other by a 120° backlash arm 132 which is fixed to the end of the shaft 24. The arm 132 is located in a 120° recess in a boss on the upper surface of the gear 130. The drive gear 130 drives the gear 50 of the down-shift cam unit 22 in a 2:1 ratio. The gear 68 which is also attached to the cam unit shaft 48 drives an idler gear 134 in a 2:1 ratio while gear 136, which is fixed to the idler gear 134 shaft, drives the trigger unit drive gear 30 in a 2:1 ratio. The resultant ratio between the input shaft gear 130 and the trigger unit 26 gear 30, which is rotated in the opposite direction to the direction of rotation of the gear 130, is 8:1.

The down-shift cam unit 22 gear 50 drives the up-shift cam unit 20 gear 50 via two idler gears 138 in a 1:1 ratio in opposite directions of rotation.

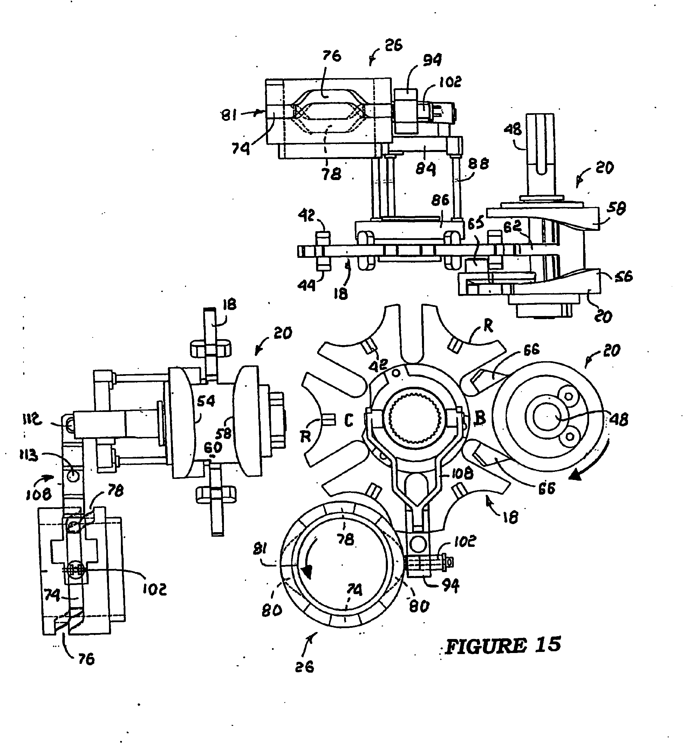

The operation of the controller of the invention is now described with reference to Figures 10 to 13 and 15 to 22. In Figures 15 to 22 only the bare essentials of the controller 10 are shown for the purpose of describing the ratio shifting process of the controller.

In this description only ratio up shifting of the controller is described with the ratio down shifting operation being identical but with the down shift cam unit 22 rotating in the opposite direction of rotation to that of the unit 20 for driving the Geneva wheel 18 in a clockwise direction in ratio down shifting as opposed to the anticlockwise direction of rotation of the Geneva wheel 18 in ratio up shifting.

It is to be noted that in Figures 15 to 22 the trigger unit 26 rotates at 12.5% of the speed of rotation of the input shaft gear 130 and at 25% of the rotational speed of the cam unit 20.

In Figure 15, and in the remaining drawings 16 to 22 the trigger unit 26 and the cam unit 20 are rotating in the direction of the arrows in the drawings. The actuator assembly 28 trigger pin 102 solenoid 98 is deactivated by the controller 10 microprocessor, not shown, on a ratio up shift demand by the operator of the controller to release the pin 102, under the bias of the spring 106 in Figure 14, onto the trigger unit 26 barrel cam groove 74 at the surfacing position 81 of the groove 74 which is shown in Figures 10 and 11.

On the release of the pin 102 the Geneva wheel 18 supporting collar 86 of the actuator assembly 28 is holding the Geneva wheel in the centre position of its three position vertical movement relatively to the cam unit 20, with the radiused end R of its arm B riding on the outer radiused surfaces of the locking disc 62, not seen in Figures 15 to 18, and the cylindrical spacer 60 to its rear. In this position the Geneva wheel is held locked by its arm B (as well as its opposite arm C) to the rotating cam unit 20 (and its cam unit 22, not shown) against rotation about the output shaft 16 axis.

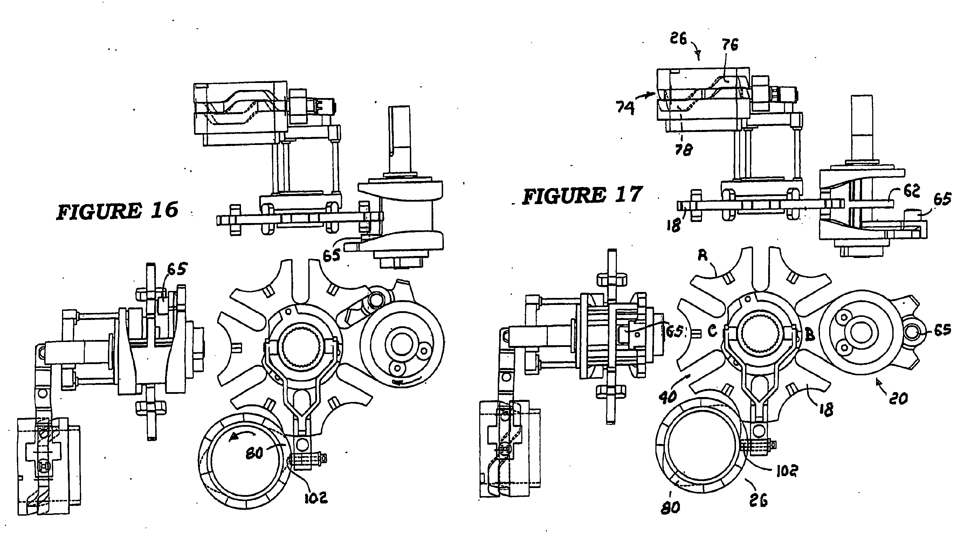

The spring biased trigger pin 102 now travels, in the rotating barrel cam groove 74, from the central position 81 of the horizontal lobe 80 down the lobe 80 towards the ratio up shift groove lobe 76 as shown in the plan and side elevations of Figures 15, 16 and 17. The cam unit 20 and its Geneva wheel 18 drive pin 65 have in the meantime been rotated through their 0°, 60° and 180° positions of rotation, as shown in Figures 15 to 17, by the timing of the controller gearing. It will be noticed from these drawings that up to the Figure 17 condition of the illustrated controller components that no vertical movement of the Geneva wheel has taken place and the wheel 18 remains locked against rotation by the cam unit 20 and that the upper end of the Geneva wheel 18 cam unit 20 drive pin 65 remains clear of the underside of the wheel 18.

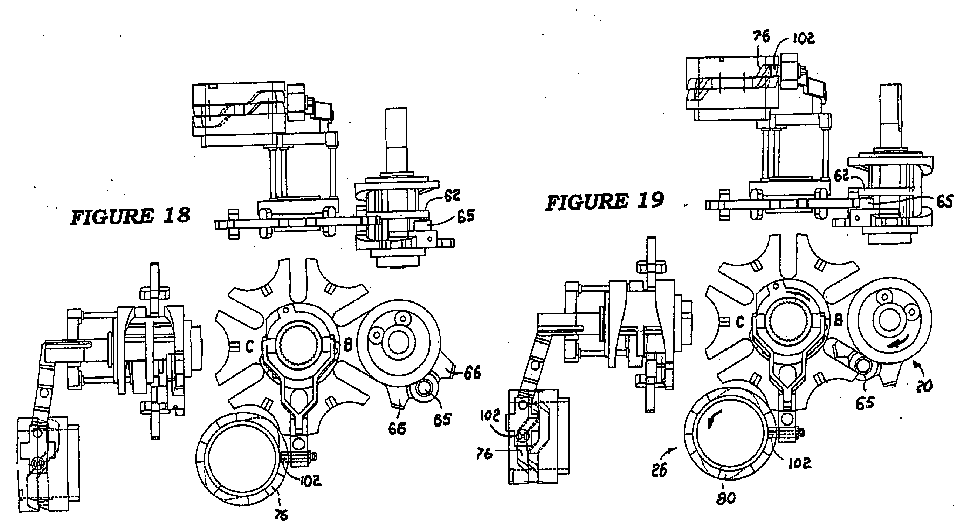

From the Figure 17 position of the trigger pin 102, the pin continues to ride up the oncoming slope of the ratio up shift lobe 76 and from the Figure 18 end elevation, that the downward movement of the actuator assembly arm 108, and so the collar 86, causes the Geneva wheel arm B to commence moving downwardly to unlock the wheel 18 from the cam units 20 and 22. When the cam unit 20 drive pin 65 reaches its Figure 19 300° ratio up shift position of rotation the cam unit 20 drive pin 65 enters the Geneva wheel 18 radial slot 40 from below the descending wheel arm B to commence driving the Geneva wheel 18 in the anticlockwise direction of the arrow, in the plan view, while the cam followers 44 are supported by the Geneva wheel support formations 66.

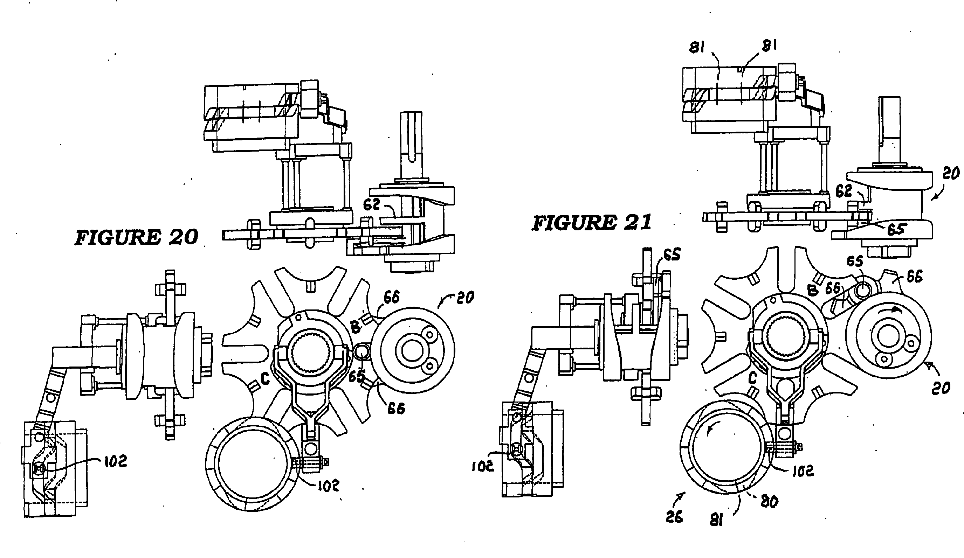

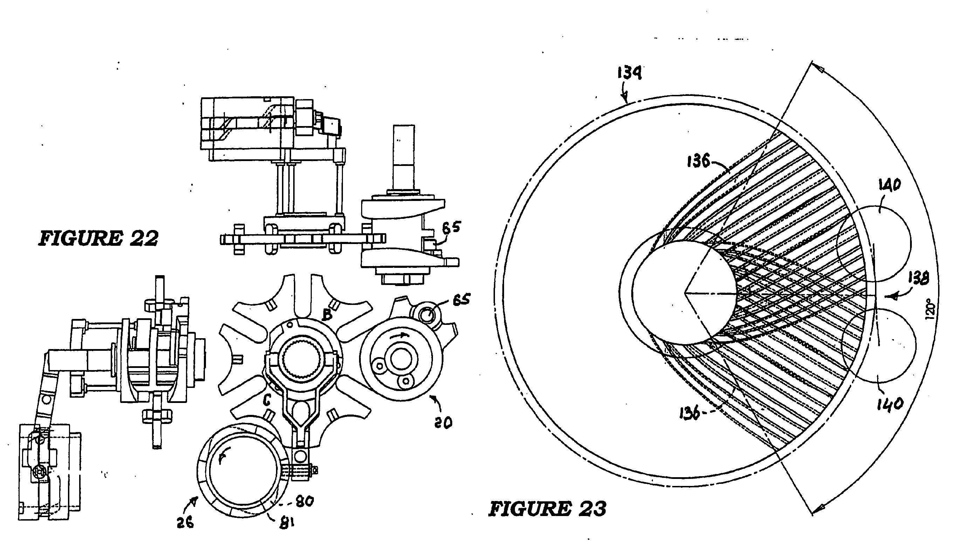

The pin 65 continues driving the Geneva wheel 18 arm B through its Figures 20 360° position in Figure 20 to the position shown in Figure 21 through 120° from which the Geneva wheel is lifted by its cam followers 44 riding on the cam unit 20 cam 54 and the cam unit 22 cam 58 to lift the Geneva wheel into engagement with the locking disc 62 and the spacer 60 finally to again lock the Geneva wheel 18 against rotation, as is shown in Figure 22. Upon further rotation of the trigger unit 26 the trigger pin 102 comes into contact with a horizontal lobe 80, as is shown in the plan view of Figure 22, which, as mentioned above, lifts the pin 102 to the surface of the trigger unit from where the solenoid 98 holds the pin clear of the cam slot 74 or slightly retracts it clear of the trigger unit surface to await either a further ratio up shift or down shift demand from the operator of the controller. In the Figure 20 position of the drive pin 65, the Geneva wheel support formations 66 support the wheel 18 against downward movement as they enter, remain in and leave the underside of the Geneva wheel.

Returning now to the controller input shaft 16 and the function of its various components. As is shown in Figures 4 and 6 the upper end of the shaft 16 portion 34 includes a chamber 127 for engagement with an adjustment rod 128 the lower end of which carries a head 129 which is rotatably located in an aperture in the upper wall of the chamber 128, as shown in Figures 4 and 6. The upper end portion of the rod is threaded and, as seen in Figure 4, passes through a threaded bore in the upper surface of the post 114 on which the upper collar 84 of the indexing actuator assembly is slidably located.

The upper end of the rod 128 is rotatably engaged with a low power motor which is controlled by the controller microprocessor which acts, in this mode of operation, on instruction from suitably placed sensors in the housing in which the IVT and the controller 10 are located. As and when the rod 128 is rotated by the motor it, and the shaft portion 34, are moved upwardly or downwardly by its threaded connection with the post 114. As the shaft portion 34 is moved its helically threaded connection with the shaft portion 36 causes the portion 36 and the Geneva wheel which it carries to be rotated relatively to it. The purpose of this fine rotational position adjustment of the Geneva wheel is to maintain exactness of function of the Geneva wheel 18 and to compensate for variable operating parameters of the controller such as oil temperature, torque transmission through the CVT, chain or gear wear and so on.

The incrementally operable CVT of WO 2005/036028 A1 has a ratio changing arrangement which includes a pair of frusto conically faced ratio changing discs 134, as shown in Figure 23, which are mounted on the machine output shaft for rotation with the shaft. The discs are movable towards and away from each other in ratio changing, with each including on their facing tapered faces a series of almost radial grooves 136, as shown in Figure 23, in which the ends of link pins of a loop of the machine drive chain between the discs are movable towards and away from the machine output shaft. The drive chain enters and leaves its loop between the discs through a throat 138 which is defined between two spaced sprockets 140 which are movable towards and away from the discs by the ratio changing arrangement in ratio changing. The machine ratio changing arrangement additionally includes an output shaft drive arrangement, not shown, which in one form or another, includes a series of chain engaging teeth or bars, which are arranged in a circumferential direction between the discs and are movable relatively to each other. The circumferential length of this disc 134 drive arrangement is importantly greater than the distance separating the chain throat defining sprockets 136.

To ensure uninterrupted rotation of the discs 134, and so the output shaft, it is important that the drive arrangement traverses the throat 138 as it is rotated by the chain without any interruption of its circular chain-driven motion. To enable this to be done it is necessary that the teeth or bars of the drive arrangement are, in their path across the throat, perfectly engaged with the drive chain on both sides of the throat before releasing the bite of the chain leaving or entering the throat to ensure continuity of drive force from the chain of the machine to its output shaft during a complete 360° revolution of the drive arrangement. This throat 134 transition of the drive arrangement must occur in all ratio positions of the chain between the discs 134.

To avoid interference of the machine drive chain with whatever disc 134 drive arrangement is employed by the machine it is important that whatever controls the machine will prevent any ratio changing while the drive arrangement is in the throat zone of the chain circle between the discs 134.

To achieve this, the controller 10 input shaft 24 needs to be synchronised with the drive teeth or bar grooves 136 in the discs 134 to shift the ratio of the CVT when the grooves 136 are not traversing the chain throat 138. Since the Geneva controller 10 input shaft 24 is able to rotate in both directions during operation of the controller, synchronisation of the drive bar grooves 136 is required whenever the direction of rotation of input shaft 24 is changed.

This is accomplished by having the 120° backlash provided by the input shaft 24 backlash arm 132 between the input shaft 24 and input shaft gear 130 that corresponds to the 120° synchronisation of disc 134 grooves in Figure 23 required when the direction of rotation is reversed.

Although the detailed description of the controller 10 of the invention is concerned almost exclusively with the CVT of WO 2005/036028A1 it is to be understood that with minor modifications or adjustments the controller 10 could find equal application with CVT's of a similar type or any machine which requires forward and reverse incremental operation on demand with a free wheel capacity, between the two demand positions of operation of the machine.

## Claims

1. A Geneva motion controller (10) for operating the indexed movements of a machine comprising:
a rotatable input shaft (24),
a rotatable output shaft (16),
a Geneva wheel (18) which is engaged with and rotatable by the output shaft **(16),**
first and second Geneva wheel cam units (20, 22) which are rotatable in opposite directions by the input shaft (24) on axes which are parallel to and located on diametrically opposite sides of the axis of rotation of the Geneva wheel (18), with
each Geneva wheel cam unit (20, 22) being adapted, independently of each other, in dependence, on the required direction of rotation of the Geneva wheel (18), to engage and partially rotate the Geneva wheel (18) through a predetermined degree of indexed rotation, and
means (26, 28) for bringing one or the other of the cam units (20, 22) into driving engagement with the Geneva wheel (18),
**characterised in that**:
each of the Geneva wheel cam units (20, 22) has three axially spaced formation arrangements (54, 58, 62) with the central formation (62) of both units (20, 22) together being adapted to lock the Geneva wheel (18) against rotation while enabling the cam units to continue rotating with the upper formation arrangement (54) of the first cam unit (22) including a downwardly directed formation (65) for releasably engaging and driving the Geneva wheel (18) for indexed rotation in a first direction with the lower formation arrangement (58) of the second cam unit (20) including an upwardly directed formation (65) for releasably engaging and driving the Geneva wheel (18) only in the opposite direction of rotation when the cam unit (20, 22) formations (65) are separately brought into engagement with the Geneva wheel (18) by the driving means (26, 28) on a demand signal from the controller (10) operator.

2. A controller as claimed in claim 1 wherein the Geneva wheel (18) is slidably engaged on the controller (16) output shaft.

3. A controller as claimed in either one of claims 1 or 2 wherein the Geneva wheel (18) is a six-armed (38) wheel for index rotating the output shaft in 60° increments of rotation.

4. A controller as claimed in any one of the above claims wherein at least the portion (36) of the controller output shaft (16) on which the Geneva wheel (18) is slidable is linearly splined and the Geneva wheel includes an axially projecting hub (46) which is internally splined to be axially slidable on the output shaft (16).

5. A controller as claimed in claim 4 wherein the three formation arrangements (54, 58, 62) on each of the cam units (20, 22) are horizontally aligned with each other and the driving means (26) includes a collar (86) which surrounds and is rotatably engaged with a projecting portion of the Geneva wheel hub (46) for slidingly moving the Geneva wheel (18) in and out of engagement with the three formation arrangements (54, 58, 62) of the cam units (20, 22).

6. A controller as claimed in claim 5 wherein the driving means (26, 28) includes a cylindrical trigger unit (26) which is situated above the output shaft (16) with its cylindrical side wall including an up shift cam formation (76) and diametrically opposite an inverted identically profiled down shift cam formation (78), a trigger arrangement (82) including a trigger pin (102) which is movable onto a circumferential path on or adjacent the trigger unit (26) during 180° of rotation of the trigger unit (26) with either of the cam formations (76, 78) located at the centre of the 180° pin (102) path during an index shift to cause the Geneva wheel hub collar (86) to raise or lower the Geneva wheel (18) into engagement with either the up (20) or down shift (22) cam unit Geneva wheel drive formations (65) of the formation arrangements (54, 58, 62) on the required demand signal from the controller operator.

7. A controller as claimed in claim 6 wherein the trigger arrangement (82) includes means (106) for biasing the trigger pin (102) towards the trigger unit (26) surface and an electrical solenoid (98) for holding the pin (102) clear of the remaining cam formation (76 or 78) at the end of its 180° path around the trigger unit (26) cylinder.

8. A controller as claimed in claim 7 wherein the trigger pin (102) path is provided by a barrel cam groove (74) including the up (76) and down (78) shift cam formations in the outer wall of the trigger unit (26) cylinder and into which the pin (102) is biased.

9. A controller as claimed in claim 8 wherein the barrel cam groove (74) surfaces onto the outer surface of the trigger unit (26) cylinder at diametrically opposite positions (80) of the groove which are at 90° to a diametrical line which is centred on the up (76) and down (78) shift cam formations of the barrel groove (74) with each up or down index shift demand of the controller commencing by engaging the pin (102) with the trigger pin path (74) at a surfaced position (80) of the barrel cam groove (74) which is ahead of the required up (76) or down (78) shift cam formation in the groove (74), in the direction of rotation of the trigger unit 26 cylinder with the opposite following surfaced position (80) of the barrel cam groove (74) lifting the trigger pin (102) to the surface of the trigger unit (26) from where it is held from the surface by the activated trigger arrangement (82) solenoid (98).

10. A controller as claimed in claim 9 wherein the trigger arrangement (82) includes a substantially centrally pivoted arm (108) which is connected at one end to means connected to the Geneva wheel collar (86) and at the other end to a vertically movable trigger pin block (94) which carries the trigger pin (102), its biasing means (106) and its solenoid (98) to cause the arm (108) to be rocked about its pivot pin, by the trigger pin (102) in following its path around the trigger unit (26) cylinder, to move the collar (86) between its three axial positions of engagement with the cam unit formation arrangements (54, 58, 62).

11. A controller as claimed in any one of the above claims wherein the free ends of the Geneva wheel arms (38) are concavely radiused (R) and each of the cam unit (20, 22) axially spaced formation arrangements (54, 58, 62) of each of the Geneva wheel (18) cam units (20, 22) include an upper down shift cam formation (54), a central cylindrical Geneva wheel locking formation (62) which is centred on the axis of rotation of the cam unit (20, 22) with the radius (R) of the locking formation (62) corresponding to the radius of the free ends of the Geneva wheel arms (38) and a lower up shift cam formation (58) with the down and up shift cam formations (54, 58) being identical and inverted relatively to each other.

12. A controller as claimed in claim 11 wherein the Geneva wheel (18) ratio down shift formation arrangement includes a lobe (64) which projects radially outwardly from the formation arrangement down shift cam formation (54) and carries a downwardly directed Geneva wheel drive pin (65) and the ratio up shift formation arrangement includes a lobe (64) which projects radially outwardly from the up shift formation arrangement and carries an upwardly directed Geneva wheel drive pin (65).

13. A controller (10) as claimed in any one of the above claims wherein the machine which it is to control is a CVT.

## Patentansprüche

1. Steuergerät für ein Malteserkreuzgetriebe (10) zum Steuern der intermittierenden Bewegungen einer Maschine, umfassend:
eine drehbare Antriebswelle (24),
eine drehbare Abtriebswelle (16),
ein Malteserkreuz (18), das sich in Eingriff mit der Abtriebswelle (16) befindet und mittels dieser drehbar ist,
eine erste und eine zweite Malteserkreuz-Nockeneinheit (20, 22), die mittels der Antriebswelle (24) in entgegengesetzte Richtungen auf Achsen drehbar sind, die parallel zu der Drehachse des Malteserkreuzes (18) liegen und auf diametral gegenüberliegenden Seiten dieser Drehachse angeordnet sind, wobei jede Malteserkreuz-Nockeneinheit (20, 22) so ausgelegt ist, dass sie, unabhängig von der anderen, in Abhängigkeit von der erforderlichen Drehrichtung des Malteserkreuzes (18) in das Malteserkreuz (18) eingreift und dieses mit einem vorgegebenen Grad einer intermittierenden Drehung teilweise dreht, und
Mittel (26, 28), die die eine oder die andere Nockeneinheit (20, 22) in einen antreibenden Eingriff mit dem Malteserkreuz (18) bringen,
**dadurch gekennzeichnet, dass**:
jede der Malteserkreuz-Nockeneinheiten (20, 22) drei axial beabstandete Strukturanordnungen (54, 58, 62) hat, wobei die zentralen Strukturen (62) beider Einheiten (20, 22) zusammen so ausgelegt sind, dass sie das Malteserkreuz (18) gegen eine Drehung blockieren, während sie die Fortsetzung der Drehbewegung der Nockeneinheiten ermöglichen, wobei die obere Strukturanordnung (54) der ersten Nockeneinheit (22) eine nach unten gerichtete Struktur (65) zum lösbaren Eingreifen in das Malteserkreuz (18) und dessen Antreiben zum Zwecke einer intermittierenden Drehung in eine erste Richtung einschließt, wobei die untere Strukturanordnung (58) der zweiten Nockeneinheit (20) eine nach oben gerichtete Struktur (65) zum lösbaren Eingreifen in das Malteserkreuz (18) und dessen Antreiben nur in die entgegengesetzte Drehrichtung einschließt, wenn die Strukturen (65) der Nockeneinheiten (20, 22) durch die Antriebsmittel (26, 28), auf ein von dem Bediener des Steuergerätes (10) ausgehendes Anforderungssignal hin, getrennt in Eingriff mit dem Malteserkreuz (18) gebracht werden.

2. Steuergerät nach Anspruch 1, wobei sich das Malteserkreuz (18) gleitend in Eingriff mit der Abtriebswelle (16) des Steuergerätes befindet.

3. Steuergerät nach Anspruch 1 oder 2, wobei das Malteserkreuz (18) ein Rad mit sechs Gliedern (38) zum intermittierenden Drehen der Abtriebswelle in Drehschritten zu je 60° ist.

4. Steuergerät nach einem der vorangehenden Ansprüche, wobei mindestens der Abschnitt (36) der Abtriebswelle (16) des Steuergerätes, auf der das Malteserkreuz (18) gleitend angeordnet ist, lineare Längsnuten aufweist und das Malteserkreuz eine axial vorspringende Nabe (46) einschließt, die innere Längsnuten aufweist, um axial auf der Abtriebswelle (16) gleiten zu können.

5. Steuergerät nach Anspruch 4, wobei die drei Strukturanordnungen (54, 58, 62) auf jeder der Nockeneinheiten (20, 22) horizontal aufeinander ausgerichtet sind und das Antriebsmittel (26) einen Bund (86) einschließt, der einen vorspringenden Abschnitt der Nabe (46) des Malteserkreuzes umgibt und sich drehbar in Eingriff mit diesem Abschnitt befindet, um das Malteserkreuz (18) gleitend in Eingriff und außer Eingriff mit den drei Strukturanordnungen (54, 58, 62) der Nockeneinheiten (20, 22) zu bringen.

6. Steuergerät nach Anspruch 5, wobei das Antriebsmittel (26, 28) eine oberhalb der Abtriebswelle (16) angeordnete zylindrische Auslösereinheit (26), deren zylindrische Seitenwand eine Hochschalt-Nockenstruktur (76) und diametral gegenüber eine umgekehrte, mit identischem Profil versehene Herunterschalt-Nockenstruktur (78) einschließt, eine Auslöseranordnung (82) einschließlich eines Auslöserstiftes (102), der während einer Drehung der Auslösereinheit (26) von 180° auf eine Umfangsbahn auf der oder benachbart zu der Auslösereinheit (26) hin beweglich ist, einschließt, wobei während eines intermittierenden Schaltvorgangs sich eine der beiden Nockenstrukturen (76, 78) im Zentrum der Bahn des Stiftes (102) von 180° befindet, um zu bewirken, dass der Bund (86) der Malteserkreuznabe auf das von dem Bediener des Steuergerätes ausgehende erforderliche Anforderungssignal hin das Malteserkreuz (18) durch Anheben oder Absenken in Eingriff mit entweder der Hochschalt-(20)- oder Herunterschalt-(22)-Nockeneinheit-Malteserkreuz-Antriebsstruktur (65) der Strukturanordnungen (54, 58, 62) bringt.

7. Steuergerät nach Anspruch 6, wobei die Auslöseranordnung (82) Mittel (106) zum Vorbelasten des Auslöserstiftes (102) gegenüber der Oberfläche der Auslösereinheit (26) und einen Elektromagneten (98) zum Halten eines Abstandes zwischen dem Stift (102) und der restlichen Nockenstruktur (76 oder 78) am Ende seiner Bahn von 180° um den Zylinder der Auslösereinheit (26) herum einschließt.

8. Steuergerät nach Anspruch 7, wobei die Bahn des Auslöserstiftes (102) durch eine Kurventrommelnut (74) bereitgestellt ist, die die Hochschalt-(76)- und Herunterschalt-(78)-Nockenstrukturen in der Außenwand des Zylinders der Auslösereinheit (26) einschließt und in die der Stift (102) unter Vorbelastung eingreift.

9. Steuergerät nach Anspruch 8, wobei die Kurventrommelnut (74) die Außenoberfläche des Zylinders der Auslösereinheit (26) an diametral gegenüberliegenden Positionen (80) der Nut erreicht, die in einem Winkel von 90° zu einer Durchmesserlinie liegen, die auf den Hochschalt-(76)- und Herunterschalt-(78)-Nockenstrukturen der Trommelnut (74) zentriert ist, wobei jeder intermittierende Hochschalt- oder Herunterschaltvorgang, der durch das Steuergerät angefordert wird, damit beginnt, dass der Stift (102) in die Auslöserstiftbahn (74) an einer Oberflächenposition (80) der Kurventrommelnut (74) eingreift, die der erforderlichen Hochschalt-(76)- oder Herunterschalt-(78)-Nockenstruktur in der Nut (74) in der Drehrichtung des Zylinders der Auslösereinheit (26) vorausliegt, wobei die gegenüberliegende folgende Oberflächenposition (80) der Kurventrommelnut (74) den Auslöserstift (102) an die Oberfläche der Auslösereinheit (26) hebt, von der er durch den aktivierten Elektromagneten (98) der Auslöseranordnung (82) ferngehalten wird.

10. Steuergerät nach Anspruch 9, wobei die Auslöseranordnung (82) einen im Wesentlichen zentral schwenkbaren Arm (108) einschließt, der an einem Ende mit Mitteln, die mit dem Malteserkreuzbund (86) verbunden sind, und an dem anderen Ende mit einem vertikal beweglichen Auslöserstiftblock (94), der den Auslöserstift (102), sein Vorbelastungsmittel (106) und seinen Elektromagneten (98) trägt, verbunden ist, um zu bewirken, dass der Arm (108) durch den Auslöserstift (102), während dieser seiner Bahn um den Zylinder der Auslösereinheit (26) herum folgt, um seinen Drehzapfen herum geschwenkt wird, um den Bund (86) zwischen seinen drei axialen Positionen des Eingriffs in die Nockeneinheit-Strukturanordnungen (54, 58, 62) zu bewegen.

11. Steuergerät nach einem der vorangehenden Ansprüche, wobei die freien Enden der Malteserkreuzglieder (38) einen konkaven Radius (R) aufweisen und jede der in die Nockeneinheiten (20, 22) eingeschlossenen axial beabstandeten Strukturanordnungen (54, 58, 62) jeder der Nockeneinheiten (20, 22) des Malteserkreuzes (18) eine obere Herunterschalt-Nockenstruktur (54), eine zentrale zylindrische Malteserkreuz-Arretierungsstruktur (62), die auf der Drehachse der Nockeneinheit (20, 22) zentriert ist, wobei der Radius (R) der Arretierungsstruktur (62) dem Radius der freien Enden der Malteserkreuzglieder (38) entspricht, und eine untere Hochschalt-Nockenstruktur (58) einschließt, wobei die Herunterschalt- und Hochschalt-Nockenstrukturen (54, 58) identisch und in Bezug aufeinander umgekehrt sind.

12. Steuergerät nach Anspruch 11, wobei die Übersetzungsherunterschalt-Strukturanordnung des Malteserkreuzes (18) einen Nocken (64) einschließt, der von der Herunterschalt-Nockenstruktur (54) der Strukturanordnung radial nach außen vorspringt und einen nach unten gerichteten Malteserkreuz-Mitnehmerstift (65) trägt, und die Übersetzungshochschalt-Strukturanordnung einen Nocken (64) einschließt, der von der Hochschalt-Strukturanordnung radial nach außen vorspringt und einen nach oben gerichteten Malteserkreuz-Mitnehmerstift (65) trägt.

13. Steuergerät (10) nach einem der vorangehenden Ansprüche, wobei die Maschine, die es steuern soll, ein kontinuierlich veränderliches Getriebe ist.

## Revendications

1. Contrôleur (10) de mouvement à croix de Malte pour empêcher les mouvements indexés d'une machine, comprenant :
un arbre d'entrée (24) rotatif,
un arbre de sortie (16) rotatif,
un dispositif à croix de Malte (18) qui est mis en prise avec et peut tourner grâce à l'arbre de sortie (16),
des première et seconde unités de came (20, 22) du dispositif à croix de Malte qui peuvent tourner dans des directions opposées grâce à l'arbre d'entrée (24), sur des axes qui sont parallèles et placés sur les côtés diamétralement opposés de l'axe de rotation du dispositif à croix de Malte (18), avec chaque unité de came (20, 22) du dispositif à croix de Malte qui est adaptée, indépendamment l'une de l'autre, en fonction de la direction requise de rotation du dispositif à croix de Malte (18), pour mettre en prise et faire partiellement tourner le dispositif à croix de Malte (18) sur un degré prédéterminé de rotation indexée, et
des moyens (26, 28) pour amener l'une ou l'autre des unités de came (20, 22) en mise en prise d'entraînement avec le dispositif à croix de Malte (18),
**caractérisé en ce que** :
chacune des unités de came (20, 22) du dispositif à croix de Malte a trois agencements de formation (54, 58, 62) espacés de manière axiale, avec la formation centrale (62) des deux unités (20, 22) qui sont adaptées ensemble pour bloquer le dispositif à croix de Malte (18) contre la rotation, tout en permettant aux unités de came de continuer à tourner avec l'agencement de formation supérieure (54) de la première unité de came (22) comprenant une formation (65) dirigée vers le bas pour mettre en prise de manière amovible et entraîner le dispositif à croix de Malte (18) pour la rotation indexée dans une première direction avec l'agencement de formation inférieure (58) de la seconde unité de came (20) qui comprend une formation (65) dirigée vers le haut pour mettre en prise de manière amovible et entraîner le dispositif à croix de Malte (18) uniquement dans la direction de rotation opposée lorsque les formations (65) de l'unité de came (20, 22) sont amenées séparément en mise en prise avec le dispositif à croix de Malte (18) par les moyens d'entraînement (26, 28) sur un signal de demande provenant de l'opérateur du contrôleur (10).

2. Contrôleur selon la revendication 1, dans lequel le dispositif à croix de Malte (18) est mis en prise de manière coulissante sur l'arbre de sortie du contrôleur (16).

3. Contrôleur selon l'une quelconque des revendications 1 ou 2, dans lequel le dispositif à croix de Malte (18) est une roue à six bras (38) pour faire tourner par indexation l'arbre de sortie selon des incréments de rotation de 60°.

4. Contrôleur selon l'une quelconque des revendications précédentes, dans lequel au moins la partie (36) de l'arbre de sortie (16) du contrôleur sur lequel le dispositif à croix de Malte (18) peut coulisser, est cannelée de manière linéaire et le dispositif à croix de Malte comprend un moyeu (46) en saillie axiale qui est cannelée intérieurement pour pouvoir coulisser de manière axiale sur l'arbre de sortie (16).

5. Contrôleur selon la revendication 4, dans lequel les trois agencements de formation (54, 58, 62) sur chacune des unités de came (20, 22) sont alignés de manière horizontale entre eux et les moyens d'entraînement (26) comprennent un collier (86) qui entoure et est mis en prise de manière rotative avec une partie en saillie du moyeu (46) du dispositif à croix de Malte pour déplacer de manière coulissante le dispositif à croix de Malte (18) dans et hors de mise en prise d'avec les trois agencements de formation (54, 58, 62) des unités de came (20, 22).

6. Contrôleur selon la revendication 5, dans lequel les moyens d'entraînement (26, 28) comprennent une unité de déclencheur cylindrique (26) qui est située au-dessus de l'arbre de sortie (16) avec sa paroi latérale cylindrique comprenant une formation de came de passage à la vitesse supérieure (76) et diamétralement opposée, une formation de came de passage à la vitesse inférieure (78) inversée profilée de manière identique, un agencement de déclencheur (82) comprenant une broche de déclencheur (102) qui est mobile sur une trajectoire circonférentielle sur ou adjacente à l'unité de déclencheur (26) pendant une rotation de 180° de l'unité de déclencheur (26) avec chacune des formations de came (76, 78) situées au centre de la trajectoire de la broche (102) à 180° pendant un décalage d'indexation pour amener le collier de moyeu (86) du dispositif à croix de Malte à faire monter ou abaisser le dispositif à croix de Malte (18) en mise en prise avec chacune parmi les formations d'entraînement (65) du dispositif à croix de Malte à unité de came de passage à la vitesse supérieure (20) ou à la vitesse inférieure (22) des agencements de formation (54, 58, 62) suite au signal de demande requis provenant de l'opérateur du contrôleur.

7. Contrôleur selon la revendication 6, dans lequel l'agencement de déclencheur (82) comprend des moyens (106) pour solliciter la broche de déclencheur (102) vers la surface de l'unité de déclencheur (26) et un solénoïde électrique (98) pour maintenir la broche (102) sans la formation de came restante (76 ou 78) à la fin de sa trajectoire à 180° autour du cylindre de l'unité de déclencheur (26).

8. Contrôleur selon la revendication 7, dans lequel la trajectoire de la broche de déclencheur (102) est fournie par une rainure (74) de came cylindrique comprenant les formations de came de passage à la vitesse supérieure (76) et à la vitesse inférieure (78) dans la paroi externe du cylindre de l'unité de déclencheur (26) et dans laquelle la broche (102) est sollicitée.

9. Contrôleur selon la revendication 8, dans lequel les surfaces de rainure (74) de came cylindrique sur la surface externe du cylindre d'unité de déclencheur (26) à des positions (80) diamétralement opposées de la rainure qui sont à 90° par rapport à une ligne diamétrale qui est centrée sur les formations de came de passage à la vitesse supérieure (76) et à la vitesse inférieure (78) de la rainure cylindrique (74) avec chaque demande de passage indexée à la vitesse supérieure ou inférieure du contrôleur qui commence par mettre en prise la broche (102) avec la trajectoire (74) de broche de déclencheur au niveau d'une position de surface (80) de la rainure (74) de came cylindrique qui est devant la formation de came de passage à la vitesse supérieure (76) ou à la vitesse inférieure (78) nécessaire dans la rainure (74), dans la direction de rotation du cylindre de l'unité de déclencheur (26) avec la position de surface (80) suivante opposée de la rainure (74) de came cylindrique soulevant la broche de déclencheur (102) sur la surface de l'unité de déclencheur (26) d'où elle est maintenue par rapport à la surface par le solénoïde (98) de l'agencement de déclencheur (82) activé.

10. Contrôleur selon la revendication 9, dans lequel l'agencement de déclencheur (82) comprend un bras (108) pivoté de manière sensiblement centrale qui est raccordé au niveau d'une extrémité aux moyens raccordés au collier (86) du dispositif à croix de Malte et au niveau de l'autre extrémité, à un bloc de broche de déclencheur (94) verticalement mobile qui supporte la broche de déclencheur (102), ses moyens de sollicitation (106) et son solénoïde (98) pour amener le bras (108) à être balancé autour de sa broche de pivot, par la broche de déclencheur (102) en suivant sa trajectoire autour du cylindre de l'unité de déclencheur (26), pour déplacer le collier (86) entre ses trois positions axiales de mise en prise avec les agencements de formation d'unité de came (54, 58, 62).

11. Contrôleur selon l'une quelconque des revendications précédentes, dans lequel les extrémités libres des bras (38) du dispositif à croix de Malte sont arrondies de manière concave (R) et chacun des agencements de formation (54, 58, 62) axialement espacés de l'unité de came (20, 22) de chacune des unités de came (20, 22) du dispositif à croix de Malte (18) comprennent une formation de came supérieure de passage à la vitesse inférieure (54), une formation de blocage du dispositif à croix de Malte cylindrique centrale (62) qui est centrée sur l'axe de rotation de l'unité de came (20, 22) avec le rayon (R) de la formation de blocage (62) correspondant aux rayons des extrémités libres des bras (38) du dispositif à croix de Malte et une formation inférieure de came de passage à la vitesse supérieure (58) avec les formations de came de passage à la vitesse inférieure et supérieure (54, 58) qui sont identiques et inversées l'une par rapport à l'autre.

12. Contrôleur selon la revendication 11, dans lequel l'agencement de formation de passage à la vitesse inférieure du dispositif à croix de Malte (18) comprend un lobe (64) qui fait saillie radialement vers l'extérieur à partir de la formation de came de passage à la vitesse inférieure (54) de l'agencement de formation et supporte une broche d'entraînement (65) du dispositif à croix de Malte dirigé vers le bas et l'agencement de formation de passage à la vitesse supérieure comprend un lobe (64) qui fait saillie radialement vers l'extérieur à partir de l'agencement de formation de passage à la vitesse supérieure et supporte une broche d'entraînement (65) du dispositif à croix de Malte dirigé vers le haut.

13. Contrôleur (10) selon l'une quelconque des revendications précédentes, dans lequel la machine qui doit être contrôlée est une CVT.
